(19) **Europäisches Patentamt / European Patent Office / Office européen des brevets**

(11) **EP 4 697 321 A1**

(12) **EUROPEAN PATENT APPLICATION**
published in accordance with Art. 153(4) EPC

(43) Date of publication:
18.02.2026 Bulletin 2026/08

(21) Application number: 24895549.4

(22) Date of filing: 13.06.2024

(51) International Patent Classification (IPC):
*G10L 15/00* (2013.01)

(52) Cooperative Patent Classification (CPC):
G10L 15/00; G10L 15/08; G10L 15/10

(86) International application number:
PCT/CN2024/099051

(87) International publication number:
WO 2025/112446 (05.06.2025 Gazette 2025/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.11.2023 CN 202311626722

(71) Applicants:
• Huawei Technologies Co., Ltd.
Shenzhen, Guangdong 518129 (CN)
• Tsinghua University
Beijing 100084 (CN)

(72) Inventors:
• YIN, Shi
Shenzhen, Guangdong 518129 (CN)
• LIANG, Xuewan
Shenzhen, Guangdong 518129 (CN)
• DU, Wenqiang
Beijing 100084 (CN)
• WANG, Dong
Beijing 100084 (CN)
• ZHAI, Yibin
Shenzhen, Guangdong 518129 (CN)

(74) Representative: Körber, Martin Hans
Mitscherlich PartmbB
Patent- und Rechtsanwälte
Karlstraße 7
80333 München (DE)

(54) **KEYWORD RECOGNITION METHOD AND APPARATUS, AND ELECTRONIC DEVICE**

(57) This application relates to the field of electronic device technologies, and discloses a keyword recognition method and apparatus, and an electronic device, to ensure a balance between recognition accuracy and a false alarm rate. The method includes: obtaining to-be-recognized information; decoding the to-be-recognized information based on a keyword set, to obtain a first sequence; decoding the to-be-recognized information based on a full set or a non-keyword set, to obtain a second sequence; and determining a similarity between the first sequence and the second sequence, and when the similarity meets a specified threshold condition, outputting the first sequence as a keyword recognition result. In this application, the first sequence is output as the keyword recognition result only when the similarity between the first sequence and the second sequence meets the specified threshold condition. This can ensure a balance between keyword recognition accuracy and the false alarm rate.

FIG. 3

An electronic device obtains to-be-recognized information — S301

The electronic device decodes the to-be-recognized information based on a keyword set, to obtain a first sequence — S302

The electronic device decodes the to-be-recognized information based on a full set or a non-keyword set, to obtain a second sequence — S303

The electronic device determines a similarity between the first sequence and the second sequence — S304

When the similarity meets a specified threshold condition, the electronic device outputs the first sequence as a keyword recognition result — S305

**Description**

CROSS-REFERENCE TO RELATED APPLICATIONS

This application claims priority to Chinese Patent Application No. 202311626722.3, filed with the China National Intellectual Property Administration on November 29, 2023 and entitled "KEYWORD RECOGNITION METHOD AND APPARATUS, AND ELECTRONIC DEVICE", which is incorporated herein by reference in its entirety.

TECHNICAL FIELD

Embodiments of this application relate to the field of speech recognition technologies, and in particular, to a keyword recognition method and apparatus, and an electronic device.

BACKGROUND

With emergence of applications such as a smart speaker and a voice assistant, a user communicates with a machine through speech. Speech keyword recognition is an important technology for implementing human-machine speech interaction, and is widely applied to various smart devices and speech retrieval systems to complete device wakeup and device control.

Currently, when there is no noise or little noise, speech keyword recognition can achieve excellent application effect. However, in real environments with complex background noise (for example, a subway station, a KTV, and a conference room), performance deteriorates sharply (a false alarm rate surges or recognition accuracy drops sharply), and the system may even fail to work normally. Therefore, currently, a recognition method that can ensure speech keyword recognition performance in different environments is urgently needed.

SUMMARY

Embodiments of this application provide a keyword recognition method and apparatus, and an electronic device, to ensure a balance between keyword recognition accuracy and a false alarm rate.

According to a first aspect, an embodiment of this application provides a keyword recognition method, applied to an electronic device. In the method, the electronic device obtains to-be-recognized information; decodes the to-be-recognized information based on a keyword set, to obtain a first sequence; decodes the to-be-recognized information based on a full set or a non-keyword set, to obtain a second sequence; and determines a similarity between the first sequence and the second sequence, and when the similarity meets a specified threshold condition, outputs the first sequence as a keyword recognition result. Optionally, the keyword set may include a plurality of keywords, or may include one keyword.

In the method, after obtaining the to-be-recognized information, the electronic device may respectively decode the to-be-recognized information based on the keyword set and the full set or the non-keyword set, to obtain the first sequence and the second sequence, so that the electronic device can determine whether the similarity between the first sequence and the second sequence meets the specified threshold condition, to determine the final output of the keyword recognition result. This balances recognition accuracy and a false alarm rate.

In a possible design, the electronic device may perform feature extraction on the to-be-recognized information, to obtain feature information of the to-be-recognized information; input the feature information into a keyword model, and perform keyword recognition on the feature information based on the keyword model, to obtain at least one first candidate sequence; and output a first candidate sequence corresponding to a maximum likelihood probability as the first sequence.

Based on this design, the electronic device may output, as the first sequence, the first candidate sequence that corresponds to the maximum likelihood probability and that is recognized by the keyword model, to ensure keyword recognition accuracy.

In a possible design, the keyword model is constructed based on a first modeling unit, and the first modeling construction unit includes at least one of a grapheme, a phoneme, and a word that correspond to the keyword set.

Based on this design, a keyword module may be constructed in a plurality of manners, and is applicable to terminal devices of various scales.

In a possible design, the electronic device may perform feature extraction on the to-be-recognized information, to obtain the feature information of the to-be-recognized information; input the feature information into a background model, and recognize the feature information based on the background model, to obtain at least one second candidate sequence; and output a second candidate sequence corresponding to a maximum likelihood probability as the second sequence.

Based on this design, the electronic device may output, as the second sequence, the second candidate sequence that corresponds to the maximum likelihood probability and that is recognized by the background model, to ensure recognition accuracy.

In a possible design, the background model is constructed based on a second modeling unit, and the second modeling unit includes at least one of a grapheme, a phoneme, and a word. Optionally, the second modeling unit includes at least one of a grapheme, a phoneme, and a word that correspond to the full set or the non-keyword set.

Based on this design, the electronic device may construct the background model according to a policy for balancing storage resources and computing resources. Therefore, the background model may cover electronic devices in a plurality of forms, and the electronic devices may select different background model construction methods based on different resource states.

In a possible design, the electronic device may further determine the similarity based on a probability corresponding to the first sequence and a probability corresponding to the second sequence. The probability corresponding to the first sequence indicates a probability that the first sequence is obtained through training based on an element in the keyword set, and the probability corresponding to the second sequence indicates a probability that the second sequence is obtained through training based on an element in the full set or the non-keyword set.

Based on this design, the electronic device may determine the similarity between the first sequence and the second sequence based on the probability that the first sequence is constructed by using the keyword model and the probability that the second sequence is constructed by using the background model, to intuitively determine whether keyword recognition is accurate.

According to a second aspect, this application provides a keyword recognition apparatus. The keyword recognition apparatus includes:

a recognition module, configured to: obtain to-be-recognized information; decode the to-be-recognized information based on a keyword set, to obtain a first sequence; and decode the to-be-recognized information based on a full set or a non-keyword set, to obtain a second sequence; and

a determining module, configured to: determine a similarity between the first sequence and the second sequence; and when the similarity meets a specified threshold condition, output the first sequence as a keyword recognition result.

According to a third aspect, this application provides an electronic device, including one or more processors and one or more memories. The one or more memories are configured to store one or more computer programs and data information, and the one or more processors are configured to execute the computer programs stored in the one or more memories, so that the electronic device performs the method in any one of the first aspect. The electronic device may be the electronic device in the first aspect.

According to a fourth aspect, this application provides a computer-readable storage medium. The computer-readable storage medium stores a computer program or instructions, and when the computer program or the instructions are executed by a computing device, the computing device performs the method in any one of the first aspect or any possible implementation of any aspect.

According to a fifth aspect, an embodiment of this application provides a chip. The chip is coupled to a memory in an electronic device, so that when operating, the chip invokes a computer program stored in the memory, to implement the method in any possible design of any one of the first aspect in embodiments of this application.

According to a sixth aspect, this application provides a computer program product. The computer program product includes a computer program or instructions, and when the computer program or the instructions are executed by a computing device, the computing device performs the method in any one of the first aspect or any possible implementation of any aspect.

BRIEF DESCRIPTION OF DRAWINGS

FIG. 1 is a diagram of a keyword recognition scenario;
FIG. 2 is a diagram of an example of a possible hardware structure of an electronic device according to this application;
FIG. 3 is a schematic flowchart of a keyword recognition method according to this application;
FIG. 4a is a diagram of a decoding search graph of keyword space according to this application;
FIG. 4b is a diagram of a decoding search graph of other keyword space according to this application;
FIG. 4c is a diagram of a decoding search graph of still other keyword space according to this application;
FIG. 4d is a diagram of a decoding search graph of yet other keyword space according to this application;
FIG. 5 is a diagram of a decoding search graph of full decoding search space according to this application;
FIG. 6 is a diagram of an application architecture of an electronic device according to this application;
FIG. 7 is a diagram of a structure of a decoding graph module according to an embodiment of this application;

FIG. 8 is a diagram of training of a decoding graph module according to an embodiment of this application;
FIG. 9 is a schematic flowchart of a complete keyword recognition method according to this application; and
FIG. 10 is a diagram of a structure of a keyword recognition apparatus according to this application.

DESCRIPTION OF EMBODIMENTS

The following describes technical solutions in embodiments of this application in detail with reference to accompanying drawings in embodiments of this application.

The following first describes related concepts in embodiments of this application.

(1) Keyword spotting (keyword spotting, KWS) belongs to a subfield of the speech recognition field, and aims to spot all occurrence locations of specified words in a speech signal. Currently, keyword spotting is mainly used for keyword detection and isolated word recognition in unconstrained speech. This application is mainly used to complete isolated word recognition.

(2) A modeling unit is a basic unit for constructing a model.

(3) A false alarm rate is a probability that a target is determined to be present when there is actually no target due to common and fluctuant noise when a threshold detection method is used in a radar sounding process or another detection process. In this application, the false alarm rate is a probability that the electronic device determines that a keyword exists but the keyword actually does not exist.

In embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items (pieces)" or a similar expression thereof refers to any combination of these items, including any combination of singular items (pieces) or plural items (pieces). For example, at least one (piece) of a, b, or c may represent: a, b, c, a-b, a-c, b-c, or a-b-c, where a, b, and c may be singular or plural.

In addition, unless otherwise stated, ordinal numbers such as "first" and "second" in embodiments of this application are for distinguishing between a plurality of objects, but are not intended to limit sizes, content, an order, a time sequence, priorities, importance, or the like of the plurality of objects. For example, a second file and a second file are merely used to distinguish between different files, but do not indicate different sizes, content, priorities, importance, or the like of the two files.

Currently, when there is no noise or little noise, speech keyword recognition can achieve excellent application effect. However, in real environments with complex background noise (for example, a subway station, a KTV, and a conference room), performance deteriorates sharply (a false alarm rate surges or recognition accuracy drops sharply), and a system may even fail to work normally. Therefore, currently, a recognition method that can ensure speech keyword recognition performance in different environments is urgently needed.

To ensure keyword recognition accuracy, an embodiment of this application provides a keyword recognition method, applied to an electronic device. In the method, after obtaining to-be-recognized information, the electronic device may decode the to-be-recognized information based on a keyword set, to obtain a first sequence; and decode the to-be-recognized information based on a full set or a non-keyword set, to obtain a second sequence. The electronic device may further determine a similarity between the first sequence and the second sequence, and when the similarity meets a specified threshold condition, output the first sequence as a keyword recognition result. In this way, the electronic device may determine the output of the keyword recognition result based on the obtained similarity, so that a false alarm rate of keyword recognition can meet an actual requirement while ensuring keyword recognition accuracy. This can further ensure a balance between accuracy and the false alarm rate.

The following describes in detail embodiments of this application with reference to the accompanying drawings.

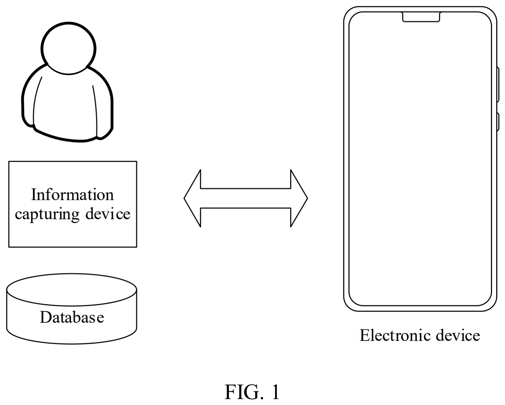

Embodiments of this application may be applied to various scenarios in which related functions are performed through keyword recognition. For example, as shown in FIG. 1, a user may communicate with the electronic device through speech. The electronic device obtains to-be-recognized speech information by performing speech capturing on surrounding environments. The electronic device may perform keyword recognition on the to-be-recognized information. For another example, the electronic device may be further connected to an information capturing device or a database, to obtain to-be-recognized information for keyword recognition.

In some examples, the electronic device may decode the to-be-recognized speech information based on a keyword set, to obtain a first sequence. In addition, the electronic device may further decode the to-be-recognized speech information based on a full set or a non-keyword set, to obtain a second sequence. The electronic device may determine, based on a similarity between the first sequence and the second sequence, an output of a keyword recognition result. For example, when the similarity between the first sequence and the second sequence meets a specified threshold condition, the electronic device may output the first sequence as the keyword recognition result. When determining that the keyword recognition result is the first sequence, the electronic device may perform a related function, for example, wake up a mobile phone.

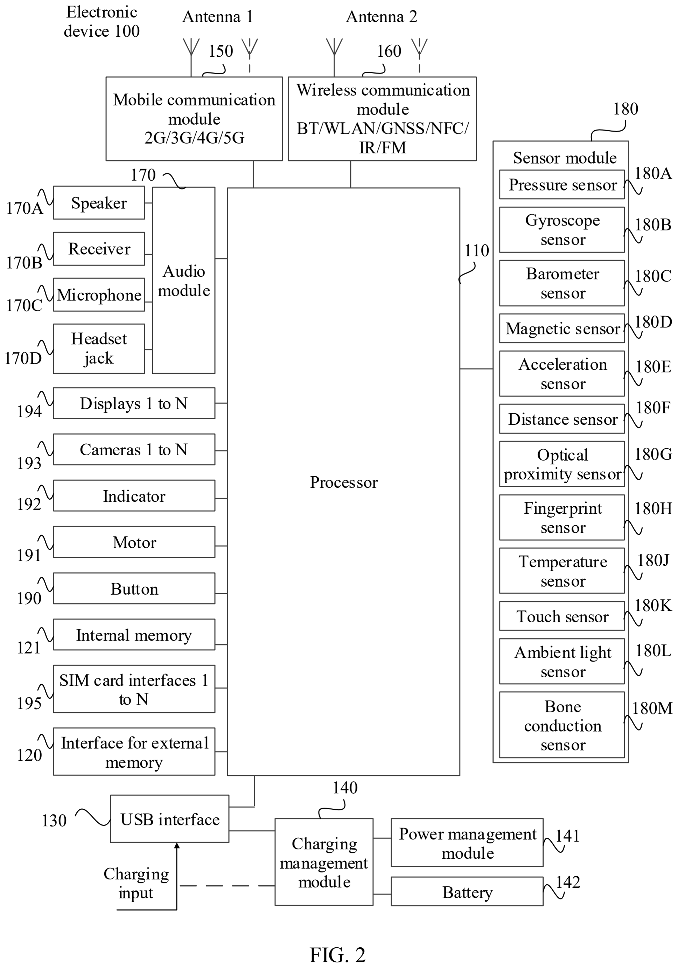

FIG. 2 is a diagram of a possible hardware structure of an electronic device. The electronic device 100 may be the electronic device in FIG. 1. As shown in FIG. 2, the electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a microcontroller unit (MCU), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device 100. The controller may generate an operation control signal based on instruction operation code and a time sequence signal, to complete control of instruction fetching and instruction execution. The memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In embodiments of this application, the processor 110 may store one or more application programs, obtain the to-be-recognized information, decode the to-be-recognized information based on the keyword set, to obtain the first sequence, and decode the to-be-recognized information based on the full set or the non-keyword set, to obtain the second sequence. In addition, the processor 110 may further determine, by determining whether the similarity between the first sequence and the second sequence meets the specified threshold condition, the output of the keyword recognition result.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device. The charging management module 140 is configured to receive a charging input from the charger. The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the electronic device 100 and that includes a wireless local area network (wireless local area network, WLAN) (for example, a wireless fidelity (Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), a fifth generation (the fifth generation, 5G) mobile communication system, a future communication system like a 6th generation (6th generation, 6G) system, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. In this embodiment of this application, the display 194 may be configured to display a home screen, an application interface, a granularity adjustment control, and the like.

The camera 193 is configured to capture a static image or a video. The camera 193 may include a front-facing camera and a rear-facing camera.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, software code of at least one application (such as Huawei Video and MeeTime), and the like. The data storage area may store data (for example, an image or a video) generated when the electronic device 100 is used, and the like. In addition, the internal memory 121 may include a high-speed random access memory, or may further include a non-volatile memory, for example, at least one magnetic disk storage device, a flash memory device, or a universal flash storage (universal flash storage, UFS).

The interface 120 for external memory may be used to connect to an external storage card, for example, a micro SD card, to extend a storage capability of the electronic device 100. The external memory card communicates with the processor 110 through the interface 120 for external memory, to implement a data storage function. For example, files such as pictures or videos are stored in the external memory card.

The electronic device 100 may implement an audio function, for example, music playing and recording, by using the audio module 170, the speaker 170A, the receiver 170B, the microphone 170C, the headset jack 170D, the application processor, and the like.

It may be understood that the components shown in FIG. 2 do not constitute a specific limitation on the electronic device. The electronic device may further include more or fewer components than those shown in the figure, or some components may be combined, or some components may be split, or there may be a different component arrangement. In the following embodiments, the electronic device 100 shown in FIG. 2 is used as an example for description.

It should be noted that the electronic device in the keyword recognition method provided in embodiments of this application may be a terminal device, or may be a server. For example, the terminal device may be a smart device like a mobile phone, a tablet computer, a wearable device, a vehicle-mounted device, an augmented reality (augmented reality, AR) device, a virtual reality (virtual reality, VR) device, a notebook computer, an uncrewed aerial vehicle, an ultra-mobile personal computer (ultra-mobile personal computer, UMPC), a netbook, a personal digital assistant (personal digital assistant, PDA), a smart speaker, or a smart television. A specific form of the electronic device in embodiments of this application is not specially limited. For example, the electronic device may be a mobile phone, or may be a smart speaker.

The following describes this application with reference to specific embodiments.

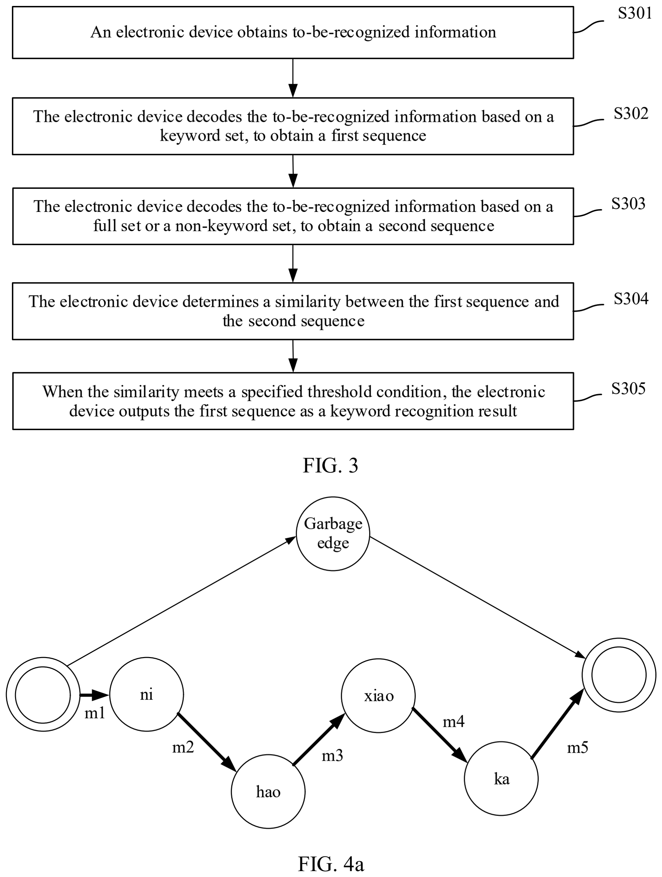

FIG. 3 is a schematic flowchart of a keyword recognition method according to an embodiment of this application. As shown in FIG. 3, the method includes the following steps.

S301: An electronic device obtains to-be-recognized information.

The to-be-recognized information may be any type of information whose search range is a finite set. For example, the to-be-recognized information may be speech information, text information, blood pressure, or a heart rate. The blood pressure and the heart rate are waveform signals.

For example, the electronic device may perform capturing on surrounding environments, to obtain the to-be-recognized information. For example, when the electronic device is a mobile phone, and the to-be-recognized information is speech information, the mobile phone may automatically perform capturing on surrounding environments, to obtain the speech information.

For another example, the electronic device may alternatively obtain the to-be-recognized information from an information capturing device or a database that captures the to-be-recognized information. For example, when the to-be-recognized information is blood pressure, a user may measure blood pressure by using a blood pressure meter. The electronic device may be connected to the blood pressure meter, to obtain blood pressure data measured by the blood pressure meter.

S302: The electronic device decodes the to-be-recognized information based on a keyword set, to obtain a first sequence. The keyword set includes one or more keywords.

In some examples, after obtaining the to-be-recognized information, the electronic device may perform feature extraction on the to-be-recognized information, to obtain feature information of the to-be-recognized information. For example, when the to-be-recognized information is speech information, the feature information may be a mel-frequency cepstral coefficient (mel-scale frequency cepstral coefficient, MFCC). For another example, when the to-be-recognized information is blood pressure data or a heart rate, the electronic device may sample and quantize the blood pressure data or a heart rate signal, and convert a continuous time-domain signal into discrete data (an array or a matrix). The discrete data is the feature information.

The electronic device may input the feature information of the to-be-recognized information into a keyword model, and perform keyword recognition on the feature information based on the keyword model, to obtain at least one first candidate sequence. The keyword model is constructed based on the keyword set. The electronic device may output a first candidate sequence corresponding to a maximum likelihood probability as the first sequence. For example, when the keyword model performs keyword recognition on the feature information, the first candidate sequence corresponding to the maximum likelihood probability is output as the recognition result of the keyword model, to ensure accuracy of keyword recognition performed by the keyword model.

For example, when the to-be-recognized information is speech information or text information, the keyword may be a character or a word. In other words, the electronic device performs keyword recognition on the feature information based on the keyword model, to determine a keyword sequence in the speech information or the text information.

For another example, when the to-be-recognized information is the blood pressure data, the keyword may be a waveform signal having a mutation point. In other words, the electronic device performs keyword recognition on the feature information of the blood pressure data based on the keyword model, to determine a mutation value in the blood pressure data. The mutation value in the blood pressure data is a mutation point in a waveform signal of the blood pressure data.

For another example, when the to-be-recognized information is the heart rate data, the keyword may be a waveform signal having a mutation point. In other words, the electronic device performs keyword recognition on the feature information of the heart rate data based on the keyword model, to recognize a mutation value in the heart rate data.

The keyword model is constructed based on a first modeling unit, and the first modeling unit may be a basic unit that forms the keyword set. In some embodiments, when the keyword is speech or text, the first modeling unit includes at least one of a grapheme, a phoneme, and a word (word) that correspond to the keyword set. The grapheme, the phoneme, and the word are basic units that form speech. For example, when speech is Chinese speech, the grapheme is pinyin of a single Chinese character, the phoneme is an initial/vowel, and the word is a Chinese character word. For example, the electronic device may construct a decoding search graph of keyword space based on the grapheme, the phoneme, or the word, and use the constructed decoding search graph of the keyword space as the keyword model. In addition, a plurality of groups of keywords may be constructed in the keyword model.

For example, the keyword model may be constructed based on graphemes corresponding to the keyword set. For example, as shown in FIG. 4a, when the keyword set includes a keyword "ni hao xiao ka", graphemes corresponding to the keyword set are "ni", "hao", "xiao", and "ka". The electronic device performs keyword recognition on the feature information based on the keyword model, to obtain one or two first candidate sequences, and calculates a likelihood probability corresponding to the first candidate sequence. The first candidate sequence may be "ni", "hao", "xiao", and "ka", or may be a blank sequence "non". The keyword model uses all sequences different from the keyword sequence "ni", "hao", "xiao", and "ka" as garbage edges, namely, blank sequences. When a first candidate sequence corresponding to a maximum likelihood probability is "ni", "hao", "ni", and "hao", the electronic device outputs "ni", "hao", "ni", and "hao" as the first sequence.

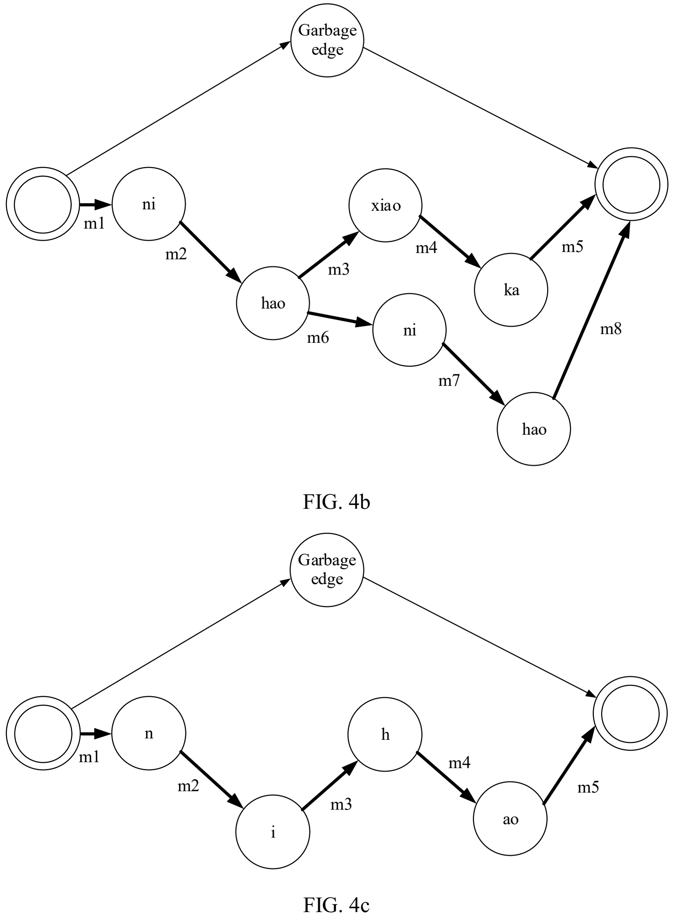

For another example, as shown in FIG. 4b, when the keyword set includes two groups of keywords: "ni hao xiao ka" and "ni hao ni hao", the keyword model includes two grapheme sequences: "ni", "hao", "xiao", and "ka", and "ni", "hao", "ni", and "hao" that correspond to the keywords, and one garbage edge. The electronic device performs keyword recognition on the feature information based on the keyword model, to obtain at least one first candidate sequence, and calculates a likelihood probability corresponding to the at least one first candidate sequence. The first candidate sequence may be "ni", "hao", "xiao", and "ka", or may be "ni", "hao", "ni", and "hao", or may be a blank sequence. When a first candidate sequence corresponding to a maximum likelihood probability is "ni", "hao", "ni", and "hao", the electronic device outputs "ni", "hao", "ni", and "hao" as the first sequence.

For another example, the keyword model may alternatively be constructed based on phonemes corresponding to the keyword set. For example, as shown in FIG. 4c, when the keyword set includes one keyword "ni hao", phonemes corresponding to the keyword set are "n", "i", "h", and "ao", that is, four phoneme elements in total. In this application, the decoding search graph of the keyword space may be constructed based on the four phoneme elements.

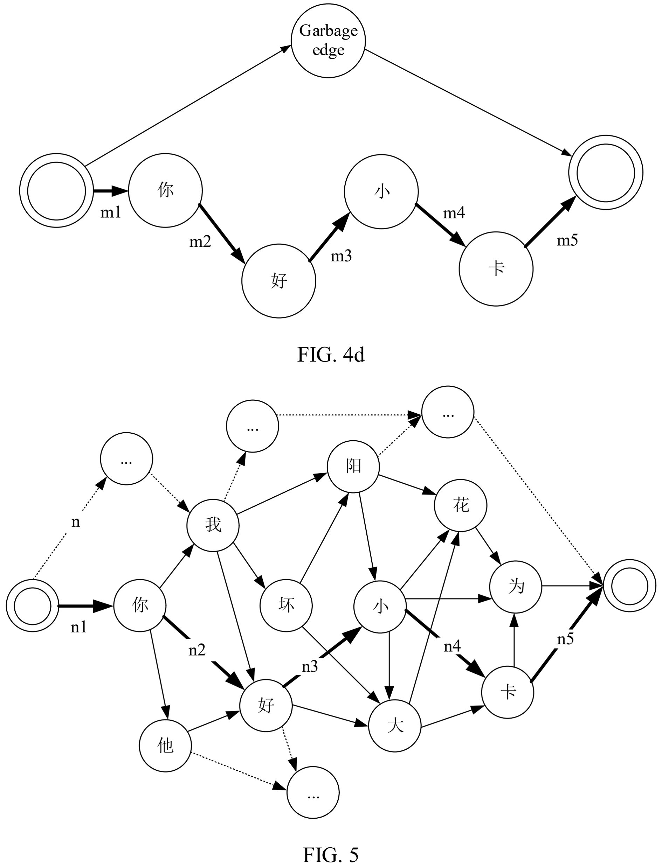

For another example, the keyword model may alternatively be constructed based on words corresponding to the keyword set. For example, when the keyword set includes a keyword "你好小卡 (Hi, Xiao Ka)", words corresponding to the keyword set include "你", "好", "小", and "卡" ("你" and "好" mean Hi, and "小" and "卡" are a nickname). As shown in FIG. 4d, in this application, the decoding search graph of the keyword space may be constructed based on keyword graphemes. The decoding search graph includes a total of four grapheme elements.

In some other embodiments, when the to-be-recognized information is the blood pressure data or the heart rate, the first modeling unit may include information such as a waveform amplitude, a wave peak, and a wave trough that correspond to the mutation point. For example, when the to-be-recognized information is the blood pressure data, the electronic device may construct the keyword recognition model based on the waveform amplitude corresponding to the mutation point. After inputting feature information of the blood pressure data into the keyword model, the electronic device performs keyword recognition based on the keyword model, to determine at least one first candidate sequence. The first candidate sequence may be an array with a mutation point, or may be a blank sequence. The keyword model sets all arrays without a mutation point as blank sequences. The electronic device may determine a likelihood probability corresponding to the at least one first candidate sequence, and output a first candidate sequence corresponding to a maximum likelihood probability as the first sequence.

S303: The electronic device decodes the to-be-recognized information based on a full set or a non-keyword set, to obtain a second sequence. The full set includes a keyword set and other information, and the non-keyword set includes information other than the keyword set in the full set. For example, when the keyword set includes "hao", the full set includes only Chinese characters, and the non-keyword set includes Chinese characters other than "hao".

In some embodiments, before decoding the to-be-recognized information based on the full set or the non-keyword set, the electronic device may further perform feature extraction on the to-be-recognized information, to obtain feature information of the to-be-recognized information. A process in which the electronic device obtains the feature information is the same as a process of determining the feature information in step S302.

The electronic device may further input the feature information into a background model (background model, BGM), and decode the feature information based on the background model, to obtain at least one second candidate sequence. The background model is constructed based on the full set or the non-keyword set. The electronic device may output a second candidate sequence corresponding to a maximum likelihood probability as the second sequence. The background model in embodiments of this application may absorb input non-keyword information or noise, to reduce environmental interference.

The background model is constructed based on a second modeling unit, and the second modeling unit may be a basic unit that forms the full set or the non-keyword set. In some embodiments, when the keyword is speech or text, the second modeling unit includes at least one of a grapheme, a phoneme, and a word that correspond to the full set or the non-keyword set. For example, the second modeling unit may include at least one of a full grapheme, a full phoneme, and a full word, or may include at least one of a grapheme, a phoneme, and a word that correspond to the non-keyword.

In this application, a decoding search graph of full decoding keyword space or non-keyword space may be constructed based on the grapheme, the phoneme, or the word, and the constructed decoding search graph of the full decoding keyword space or the non-keyword space is used as the background model. For example, in this application, different second modeling units may be selected based on resource states of the electronic device to construct the background model. Further, in this application, an appropriate modeling unit may be selected based on storage resources and a computing resource balancing policy of the electronic device to construct the background model.

For example, when computing resources are sufficient and storage resources are limited, a phoneme-based model construction method may be used in this application. For example, in this application, a decoding search graph of background space may be constructed based on a full phoneme or a non-keyword phoneme, to obtain the background model. For example, when the to-be-recognized information is Chinese speech, in this application, the decoding search graph of the background space may be constructed based on the full phoneme. The full phoneme includes Chinese initials and vowels, the initials are b, p, m, f, d, t, n, l, g, k, h, j, q, x, zh, ch, sh, z, c, s, y, w, and r, and the vowels are a, o, e, i, u, v, ai, ei, ui, ao, ou, iu, ie, ve, er, an, en, in, un, vn, ang, eng, ing, and ong.

For another example, when both computing resources and storage resources are sufficient, a grapheme-based model construction method may be used in this application. For example, in this application, a decoding search graph of background space may be constructed based on a full grapheme or a non-keyword grapheme, to obtain the background model. For example, when the to-be-recognized information is in Chinese, and the keyword is "ni hao xiao ka", in this application, the decoding search graph of the background space may be constructed based on the full grapheme. The decoding search graph of the background space includes four grapheme elements: "ni", "hao", "xiao", and "ka" in the keyword "ni hao xiao ka". For another example, in this application, when the decoding search graph of the background space is constructed based on the non-keyword grapheme, the decoding search graph does not include the four grapheme elements: "ni", "hao", "xiao", and "ka".

For another example, when computing resources are limited and storage resources are sufficient, a word-based model construction method may be used in this application. For example, in this application, a decoding search graph of background space may be constructed based on a full grapheme or a non-keyword grapheme, to obtain the background model. For example, as shown in FIG. 5, when the to-be-recognized information is in Chinese, and the keyword is "你好 小卡 (Hi, Xiao Ka)", in this application, the decoding search graph of the background space may be constructed based on the full word. The decoding search graph of the background space shown in FIG. 5 includes four word elements: "你", "好", "小", and "卡" ("你" and "好" mean Hi, and "小" and "卡" are a nickname) in the keyword "你好小卡". For another example, when the to-be-recognized information is in Chinese, and the keyword is "你好小卡", in this application, the decoding search graph of the background space may alternatively be constructed based on the non-keyword word. The decoding search graph of the background space does not include four word elements: "你", "好", "小", and "卡" in the keyword "你好小卡".

In some other embodiments, when the to-be-recognized information is the blood pressure data or the heart rate, the second modeling unit may include information such as a waveform amplitude, a wave peak, and a wave trough. This is not limited herein. For example, when the to-be-recognized information is the blood pressure data, the electronic device may construct the background model based on the waveform amplitude. After inputting feature information of the blood pressure data into the background model, the electronic device performs recognition based on the background model, to determine at least one second candidate sequence. The second candidate sequence is a waveform array. The electronic device may determine a likelihood probability corresponding to the at least one second candidate sequence, and output a second candidate sequence corresponding to a maximum likelihood probability as the second sequence.

S304: The electronic device determines a similarity between the first sequence and the second sequence.

In some embodiments, after outputting the first sequence based on the keyword model and outputting the second sequence based on the background model, the electronic device may further determine the similarity between the first sequence and the second sequence based on a probability corresponding to the first sequence and a probability corresponding to the second sequence. The probability corresponding to the first sequence indicates a probability that the first sequence is obtained through training based on an element in the keyword set, and the probability corresponding to the second sequence indicates a probability that the second sequence is obtained through training based on an element in the full set or the non-keyword set. For example, that a probability corresponding to the first sequence is closer to a probability corresponding to the second sequence indicates a higher similarity between the first sequence and the second sequence.

For example, the probability corresponding to the first sequence and the probability corresponding to the second sequence may be likelihood probabilities or posterior probabilities. In addition, the probabilities corresponding to the first sequence and the second sequence may alternatively be other probabilities. This is not limited herein.

For example, the electronic device may use a ratio of the probability corresponding to the first sequence to the probability corresponding to the second sequence as the similarity between the first sequence and the second sequence. The probability corresponding to the first sequence is a probability that an element in the keyword model forms the first sequence, and the probability corresponding to the second sequence is a probability that an element in the background model forms the second sequence. In addition, the electronic device may alternatively determine the similarity between the first sequence and the second sequence in another calculation manner. This is not limited herein.

For example, in embodiments of this application, the similarity between the first sequence and the second sequence may be determined according to the following formula: $R_{likelihood} = L_{kws}/L_{bg}$, where $R_{likelihood}$ is the similarity,

$L_{kws}$ indicates the probability corresponding to the first sequence output by the keyword model, and $L_{bg}$ indicates the probability corresponding to the second sequence output by the background model. The electronic device may use $R_{likelihood}$ as the similarity between the first sequence and the second sequence. That $R_{likelihood}$ is closer to 1 indicates a higher similarity between the first sequence and the second sequence. For example, when $L_{kws}$ indicates a likelihood probability corresponding to the first sequence, and $L_{bg}$ indicates a likelihood probability of the second sequence, the similarity $R_{likelihood}$ is a likelihood probability ratio.

For example, as shown in FIG. 4d, each arrow in the decoding search graph of the keyword model has a corresponding weight value. The weight value indicates a probability that the keyword model selects the element. The probability corresponding to the first sequence is a probability $L_{kws}$ = m1 * m2 * m3 * m4 * m5 that the four elements "你", "好", "小", and "卡" ("你" and "好" mean Hi, and "小" and "卡" are a nickname) in the keyword model form a path "你"-"好"-"小"-"卡". As shown in FIG. 5, each arrow in the decoding search graph of the background model has a corresponding weight value. The weight value indicates a probability that the background model selects the element. The probability corresponding to the second sequence is a probability $L_{bg}$ = n1 * n2 * n3 * n4 * n5 that the four elements "你", "好", "小", and "卡" in the background model form a path "你"-"好"-"小"-"卡". The electronic device may use $L_{kws}/L_{bg}$ as the similarity between the first sequence and the second sequence.

In some other embodiments, when the to-be-recognized information is the blood pressure data or the heart rate, the electronic device may determine a similarity between the first sequence and the second sequence. For example, the electronic device may compare an element in the first sequence with an element in the second sequence, to determine the similarity between the first sequence and the second sequence.

S305: When the similarity meets a specified threshold condition, the electronic device outputs the first sequence as a keyword recognition result.

In some embodiments, after obtaining the similarity, the electronic device may control the output of the keyword recognition result by determining whether the similarity meets the specified threshold condition. The specified threshold condition may be manually set based on an actual requirement. A threshold in the specified threshold condition may be related to a false alarm rate, that is, a user may set a related threshold condition based on an actual requirement for the false alarm rate. For example, when the to-be-recognized information includes a keyword, the similarity between the first sequence and the second sequence is infinitely close to 1. In consideration of a case like a calculation precision loss, the similarity between the first sequence and the second sequence is usually not equal to 1 in an actual case. For another example, when the to-be-recognized information does not include a keyword, the similarity between the first sequence and the second sequence is definitely less than 1. The user may set the specified threshold condition based on this case, to balance recognition accuracy and the false alarm rate.

In embodiments of this application, the user may directly set the threshold condition based on an actual use requirement. For example, the user may set the threshold condition through a user interface (user interface, UI) for configuring the specified threshold condition. In addition, the user may alternatively configure the threshold condition through an application programming interface (application program interface, API) for configuring the specified threshold condition. There is a linear negative correlation between the false alarm rate and the threshold in the threshold condition. For example, when the false alarm rate is less than 0.5%, the user may set the threshold condition as that the similarity is greater than 0.995.

For example, when the false alarm rate is X, the specified threshold condition includes but is not limited to the following several cases:

Case 1: The similarity is greater than or equal to 1-X.
Case 2: The similarity is less than or equal to 1 and is greater than or equal to 1-X.
Case 3: When X ranges from M to N, the similarity is greater than or equal to 1-N and less than or equal to 1-M, where N is greater than M.

When determining that the similarity meets the specified threshold condition, the electronic device determines the to-be-recognized information as the keyword, and outputs the first sequence as the keyword recognition result. For another example, when the similarity does not meet the specified threshold condition, it is determined that the to-be-recognized information does not include the keyword, and the keyword recognition result is determined as a blank. In this case, the electronic device outputs the first sequence as the keyword recognition result only when the first sequence and the second sequence meet the specified threshold condition, so that the electronic device can perform a related function.

For example, after the user configures the specified threshold condition, in embodiments of this application, the keyword recognition result may be determined based on a binary decision. Decision-making may be represented by the following formula:

$$R_{\text{likelihood}} = \frac{L_{\text{kws}}}{L_{\text{bg}}} \begin{cases} 1 & \text{a specified threshold condition is met} \\ 0 & \text{other} \end{cases}$$

$R_{\text{likelihood}}$ is the similarity, $L_{\text{kws}}$ indicates the probability corresponding to the first sequence output by the keyword model, and $L_{\text{bg}}$ indicates the probability corresponding to the second sequence output by the background model. When a made-decision is to output 1, it indicates that the first sequence is the same as the second sequence, that is, the to-be-recognized information includes the keyword. In this case, the electronic device outputs the first sequence as the keyword recognition result. When the made-decision is to output 0, it indicates that the to-be-recognized information does not include the keyword. In this case, the electronic device does not output the keyword recognition result, or the output keyword recognition result is a blank. Therefore, a balance between keyword recognition accuracy and the false alarm rate can be ensured in different scenarios and different application environments.

Based on content shown in the foregoing embodiments, the electronic device makes a decision, by determining whether the similarity between the first sequence and the second sequence meets the specified threshold condition, about the output of the keyword recognition result. In this way, it is convenient for the user to directly and simply adjust the specified threshold condition to limit the false alarm rate of keyword recognition in different scenarios, different application environments, different user requirements, and other changes. Therefore, the false alarm rate does not vary with an environment change, to ensure a balance between keyword recognition accuracy and the false alarm rate, and further ensure stable availability of a keyword recognition system.

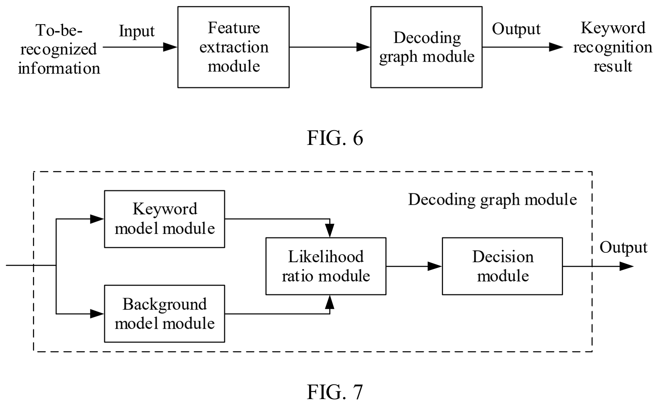

The content executed by the electronic device shown in the foregoing embodiments may be executed by an application in the electronic device. FIG. 6 is a diagram of an application architecture of an electronic device according to an embodiment of this application. The electronic device includes a feature extraction module and a decoding graph module.

The feature extraction module is configured to perform feature extraction on to-be-recognized information, to obtain feature information of the to-be-recognized information.

The decoding graph module is configured to perform keyword recognition on the feature information, to obtain a keyword recognition result.

As shown in FIG. 7, the decoding graph module may include a keyword model module, a background model module, a likelihood ratio (likelihood ratio) module, and a decision (decision) module.

The keyword model module is configured to: construct a keyword model, perform keyword recognition on the feature information of the to-be-recognized information based on the keyword model, and output a sequence corresponding to a maximum likelihood probability. The sequence corresponding to the maximum likelihood probability is a sequence with a highest score in the keyword model.

The background model module is configured to: construct a background model, recognize the feature information of the to-be-recognized information based on the background model, and output a sequence corresponding to a maximum likelihood probability.

The likelihood ratio module is configured to determine a similarity between the sequence output by the keyword model module and the sequence output by the background model module.

The decision module is configured to determine, based on the similarity, an output of the keyword recognition result.

In some embodiments, in embodiments of this application, the decoding graph module may be trained in the following manners.

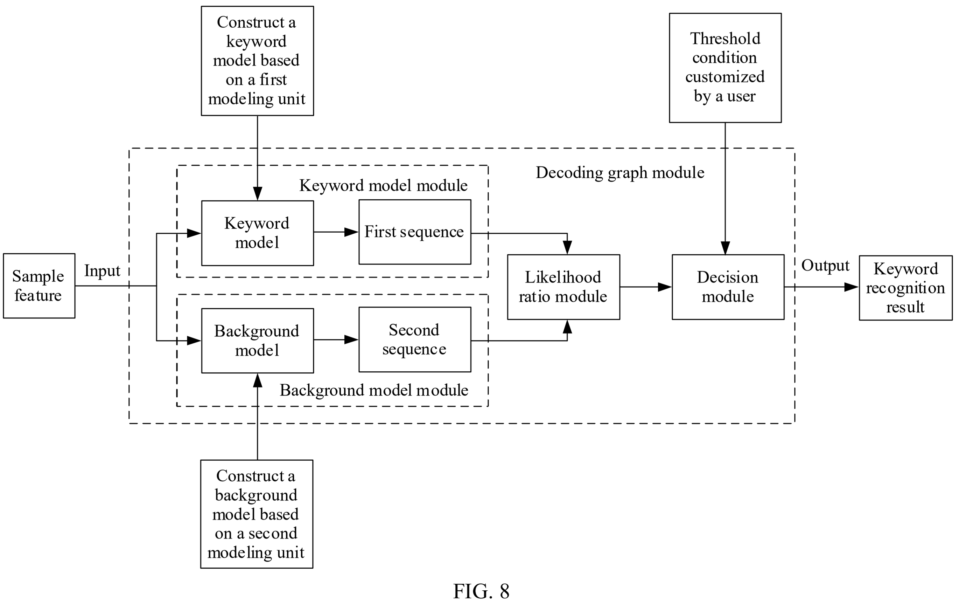

As shown in FIG. 8, in this embodiment of this application, a sample feature may be input into the decoding graph module, to train the decoding graph module. The sample feature includes a sample keyword feature and a sample non-keyword feature.

The electronic device may construct the keyword model based on a first modeling unit corresponding to a sample keyword. In addition, the electronic device may further construct a background model of full search space or non-keyword space based on a second modeling unit. A process of constructing the keyword model is the same as the process of constructing the keyword model in step S302, and a process of constructing the background model is the same as the process of constructing the background model in step S303. Details are not described herein again.

After constructing the keyword model and the background model, the electronic device respectively places the keyword model and the background model into the keyword model module and the background model module in the decoding graph module. After inputting the sample feature into the keyword model module, the electronic device performs keyword recognition on the sample feature based on the keyword model, to obtain at least one sample sequence, and outputs a sample sequence with a maximum likelihood probability as a first sequence. Similarly, after inputting the sample features into the background model module, the electronic device recognizes the sample features based on the background model, to obtain at least one sample sequence, and outputs a sample sequence with a maximum likelihood probability as a second sequence.

The keyword model module outputs the first sequence to the likelihood ratio module, and the background model module outputs the second sequence to the likelihood ratio module. The likelihood ratio module may calculate a ratio of a probability corresponding to the first sequence to a probability corresponding to the second sequence, to obtain a likelihood probability ratio, and output the likelihood probability ratio to the decision module as a similarity between the first sequence and the second sequence. The probability corresponding to the first sequence is a probability that an element in the keyword model forms the first sequence, and the probability corresponding to the second sequence is a probability that an element in the background model forms the second sequence. For example, the probability corresponding to the first sequence may be a likelihood probability of the first sequence, and the probability corresponding to the second sequence may be a likelihood probability of the second sequence.

The decision module may make a decision, by determining whether the similarity meets a specified threshold condition, about the output of the keyword recognition result. A user may configure a customized threshold condition in the decision module through a UI or a corresponding API. The electronic device may adjust the decoding graph module based on the keyword recognition result, to complete a training process of the decoding graph module.

Based on content shown in the foregoing embodiments, the user may configure the customized specified threshold condition of the decision module in the decoding graph module based on an actual case, so that the electronic device can output the keyword recognition result based on a user requirement. Further, in any environment, a balance between accuracy of a keyword recognition system and a false alarm rate can be ensured, performance of the keyword recognition system is stable, and the keyword recognition system meets an actual requirement of the user and can be configured by the user.

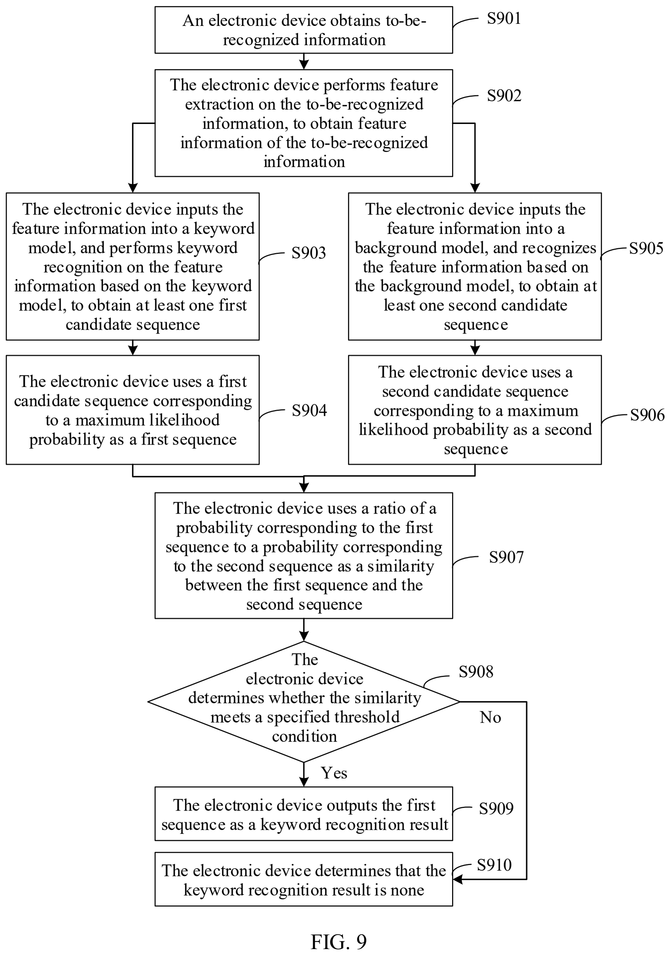

FIG. 9 is a schematic flowchart of a complete keyword recognition method according to this application. As shown in FIG. 9, the method includes the following steps.

S901: An electronic device obtains to-be-recognized information.

The to-be-recognized information may be speech information.

S902: The electronic device performs feature extraction on the to-be-recognized information, to obtain feature information of the to-be-recognized information.

S903: The electronic device inputs the feature information into a keyword model, and performs keyword recognition on the feature information based on the keyword model, to obtain at least one first candidate sequence.

The keyword model is constructed based on a first modeling unit, and the first modeling unit includes at least one of a grapheme, a phoneme, and a word that correspond to a keyword set.

S904: The electronic device uses a first candidate sequence corresponding to a maximum likelihood probability as a first sequence.

S905: The electronic device inputs the feature information into a background model, and recognizes the feature information based on the background model, to obtain at least one second candidate sequence.

The background model is constructed based on a second modeling unit, and the second modeling unit includes at least one of a grapheme, a phoneme, and a word that correspond to a full set or a non-keyword set. A quantity of grapheme elements, phoneme elements, or word elements in the background model is greater than a quantity of grapheme elements, phoneme elements, or word elements in the keyword model.

S906: The electronic device uses a second candidate sequence corresponding to a maximum likelihood probability as a second sequence.

S907: The electronic device uses a ratio of a probability corresponding to the first sequence to a probability corresponding to the second sequence as a similarity between the first sequence and the second sequence. The probability corresponding to the first sequence indicates a probability that an element in the keyword model forms the first sequence, and the probability corresponding to the second sequence indicates a probability that an element in the background model forms the second sequence. That a ratio of the probability corresponding to the first sequence to the probability corresponding to the second sequence is closer to 1 indicates a higher similarity between the first sequence and the second sequence.

S908: The electronic device determines whether the similarity meets a specified threshold condition; and if the similarity meets the specified threshold condition, performs step S909; or if the similarity does not meet the specified threshold condition, performs step S910.

S909: The electronic device outputs the first sequence as a keyword recognition result.

When outputting the first sequence as the keyword result, the electronic device determines the to-be-recognized information as a keyword, and performs a related function. For example, when the keyword is a wake-up keyword of the electronic device, and the electronic device determines that the to-be-recognized information is the keyword, the electronic device is woken up.

S910: The electronic device determines that the keyword recognition result is a blank.

Based on content shown in FIG. 9, the electronic device may determine whether the similarity between the first sequence and the second sequence meets the specified threshold condition, so that the electronic device can output the recognition result based on a user requirement, and a user can further freely modify the specified threshold condition based on a user requirement. This ensures a balance between keyword recognition accuracy and a false alarm rate in different scenarios and different application environments, to ensure stable availability of a keyword recognition system.

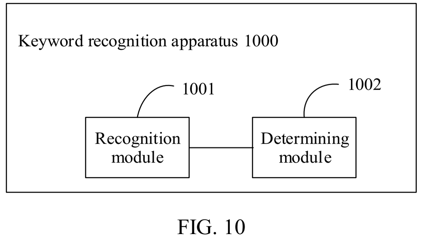

Based on the foregoing content and a same concept, FIG. 10 is a diagram of a structure of a possible keyword recognition apparatus 1000 according to this application. The keyword recognition apparatus 1000 is used in an electronic device.

In some embodiments, the electronic device includes the keyword recognition apparatus 1000, or the electronic device is the keyword recognition apparatus 1000. The keyword recognition apparatus 1000 may be configured to implement functions of the electronic device in the foregoing method embodiments, and therefore can also implement beneficial effect of the foregoing method embodiments.

A recognition module 1001 is configured to: obtain to-be-recognized information; decode the to-be-recognized information based on a keyword set, to obtain a first sequence; and decode the to-be-recognized information based on a full set or a non-keyword set, to obtain a second sequence.

A determining module 1002 is configured to: determine a similarity between the first sequence and the second sequence; and when the similarity meets a specified threshold condition, output the first sequence as a keyword recognition result.

Optionally, when the similarity does not meet the specified threshold condition, the determining module 1002 may not output the keyword recognition result.

In an optional implementation, the recognition module 1001 is specifically configured to:

perform feature extraction on the to-be-recognized information, to obtain feature information of the to-be-recognized information;
input the feature information into a keyword model, and perform keyword recognition on the feature information based on the keyword model, to obtain at least one first candidate sequence; and
use a first candidate sequence corresponding to a maximum likelihood probability as the first sequence.

In an optional implementation, the keyword model is constructed based on a first modeling unit, and the first modeling unit includes at least one of a grapheme, a phoneme, and a word that correspond to the keyword set.

In an optional implementation, the recognition module 1001 is specifically configured to:

perform feature extraction on the to-be-recognized information, to obtain the feature information of the to-be-recognized information;
input the feature information into a background model, and recognize the feature information based on the background model, to obtain at least one second candidate sequence; and
use a second candidate sequence corresponding to a maximum likelihood probability as the second sequence.

In an optional implementation, the background model is constructed based on a second modeling unit, and the second modeling unit includes at least one of a grapheme, a phoneme, and a word.

In an optional implementation, the determining module 1002 is specifically configured to:
determine the similarity based on a probability corresponding to the first sequence and a probability corresponding to the second sequence, where the probability corresponding to the first sequence indicates a probability that the first sequence is obtained through training based on an element in the keyword set, and the probability corresponding to the second sequence indicates a probability that the second sequence is obtained through training based on an element in the full set or the non-keyword set.

Based on the foregoing content and a same concept, this application provides an electronic device, including a processor and a memory. The memory is configured to store a computer program, and the processor is configured to execute the computer program stored in the memory, so that the electronic device is enabled to perform steps performed by the electronic device in the foregoing method embodiments.

Based on the foregoing content and a same concept, this application provides a computer-readable storage medium. The computer-readable storage medium stores a computer program or instructions. When the computer program or the instructions are executed by a computing device, the computing device performs steps performed by the electronic device in the foregoing method embodiments.

Based on the foregoing content and a same concept, this application provides a computer program product. The computer program product includes a computer program or instructions. When the computer program or the instructions are executed by a computing device, the computing device performs steps performed by the electronic device in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and the scope of this application. If these modifications and variations made to this application fall within the scope of the claims of this application and equivalent technologies thereof, this application is also intended to cover these modifications and variations.

**Claims**

1. A keyword recognition method, wherein the method comprises:

   obtaining to-be-recognized information;
   decoding the to-be-recognized information based on a keyword set, to obtain a first sequence;
   decoding the to-be-recognized information based on a full set or a non-keyword set, to obtain a second sequence; and
   determining a similarity between the first sequence and the second sequence, and when the similarity meets a specified threshold condition, outputting the first sequence as a keyword recognition result.

2. The method according to claim 1, wherein decoding the to-be-recognized information based on the keyword set, to obtain the first sequence comprises:

   performing feature extraction on the to-be-recognized information, to obtain feature information of the to-be-recognized information;
   inputting the feature information into a keyword model, and performing keyword recognition on the feature information based on the keyword model, to obtain at least one first candidate sequence, wherein the keyword model is constructed based on the keyword set; and
   using a first candidate sequence corresponding to a maximum likelihood probability as the first sequence.

3. The method according to claim 2, wherein the keyword model is constructed based on a first modeling unit, and the first modeling unit comprises at least one of a grapheme, a phoneme, and a word that correspond to the keyword set.

4. The method according to any one of claims 1 to 3, wherein decoding the to-be-recognized information based on the full set or the non-keyword set, to obtain the second sequence comprises:

   performing feature extraction on the to-be-recognized information, to obtain the feature information of the to-be-recognized information;
   inputting the feature information into a background model, and recognizing the feature information based on the background model, to obtain at least one second candidate sequence, wherein the background model is constructed based on the full set or the non-keyword set; and

using a second candidate sequence corresponding to a maximum likelihood probability as the second sequence.

5. The method according to claim 4, wherein the background model is constructed based on a second modeling unit, and the second modeling unit comprises at least one of a grapheme, a phoneme, and a word.

6. The method according to any one of claims 1 to 5, wherein determining the similarity between the first sequence and the second sequence comprises:
determining the similarity based on a probability corresponding to the first sequence and a probability corresponding to the second sequence, wherein the probability corresponding to the first sequence indicates a probability that the first sequence is obtained through training based on an element in the keyword set, and the probability corresponding to the second sequence indicates a probability that the second sequence is obtained through training based on an element in the full set or the non-keyword set.

7. A keyword recognition apparatus, wherein the apparatus comprises:

a recognition module, configured to: obtain to-be-recognized information; decode the to-be-recognized information based on a keyword set, to obtain a first sequence; and decode the to-be-recognized information based on a full set or a non-keyword set, to obtain a second sequence; and
a determining module, configured to: determine a similarity between the first sequence and the second sequence; and when the similarity meets a specified threshold condition, output the first sequence as a keyword recognition result.

8. The apparatus according to claim 7, wherein the recognition module is specifically configured to:

perform feature extraction on the to-be-recognized information, to obtain feature information of the to-be-recognized information;
input the feature information into a keyword model, and perform keyword recognition on the feature information based on the keyword model, to obtain at least one first candidate sequence; and
use a first candidate sequence corresponding to a maximum likelihood probability as the first sequence.

9. The apparatus according to claim 8, wherein the keyword model is constructed based on a first modeling unit, and the first modeling unit comprises at least one of a grapheme, a phoneme, and a word that correspond to the keyword set.

10. The apparatus according to any one of claims 7 to 9, wherein the recognition module is specifically configured to:

perform feature extraction on the to-be-recognized information, to obtain the feature information of the to-be-recognized information;
input the feature information into a background model, and recognize the feature information based on the background model, to obtain at least one second candidate sequence; and
use a second candidate sequence corresponding to a maximum likelihood probability as the second sequence.

11. The apparatus according to claim 10, wherein the background model is constructed based on a second modeling unit, and the second modeling unit comprises at least one of a grapheme, a phoneme, and a word.

12. The apparatus according to any one of claims 7 to 11, wherein the determining module is specifically configured to:
determine the similarity based on a probability corresponding to the first sequence and a probability corresponding to the second sequence, wherein the probability corresponding to the first sequence indicates a probability that the first sequence is obtained through training based on an element in the keyword set, and the probability corresponding to the second sequence indicates a probability that the second sequence is obtained through training based on an element in the full set or the non-keyword set.

13. An electronic device, comprising one or more processors and one or more memories,
wherein
the one or more memories store one or more computer programs, the one or more computer programs comprise instructions, and when the instructions are executed by the one or more processors, the electronic device is enabled to perform the method according to any one of claims 1 to 6.

14. A computer-readable storage medium, wherein the computer-readable storage medium is configured to store a computer program, and when the computer program is run on a computer, the computer is enabled to perform the method according to any one of claims 1 to 6.

15. A computer program product, comprising a computer program, wherein when the computer program is run on a computer, the computer is enabled to perform the method according to any one of claims 1 to 6.

16. A chip, wherein the chip is coupled to a memory, and the chip reads a computer program stored in the memory to perform the method according to any one of claims 1 to 6.

FIG. 1

Electronic device 100

Antenna 1 — 150

Antenna 2 — 160

| Mobile communication module 2G/3G/4G/5G | Wireless communication module BT/WLAN/GNSS/NFC/IR/FM |

180 — Sensor module

170 — Audio module

170A — Speaker
170B — Receiver
170C — Microphone
170D — Headset jack

194 — Displays 1 to N
193 — Cameras 1 to N
192 — Indicator
191 — Motor
190 — Button
121 — Internal memory
195 — SIM card interfaces 1 to N
120 — Interface for external memory

110 — Processor

Sensor module:
180A — Pressure sensor
180B — Gyroscope sensor
180C — Barometer sensor
180D — Magnetic sensor
180E — Acceleration sensor
180F — Distance sensor
180G — Optical proximity sensor
180H — Fingerprint sensor
180J — Temperature sensor
180K — Touch sensor
180L — Ambient light sensor
180M — Bone conduction sensor

130 — USB interface

Charging input

140 — Charging management module

141 — Power management module
142 — Battery

FIG. 2

An electronic device obtains to-be-recognized information ⟋ S301

The electronic device decodes the to-be-recognized information based on a keyword set, to obtain a first sequence ⟋ S302

The electronic device decodes the to-be-recognized information based on a full set or a non-keyword set, to obtain a second sequence ⟋ S303

The electronic device determines a similarity between the first sequence and the second sequence ⟋ S304

When the similarity meets a specified threshold condition, the electronic device outputs the first sequence as a keyword recognition result ⟋ S305

FIG. 3

FIG. 4a

FIG. 4b

FIG. 4c

FIG. 4d

FIG. 5

To-be-recognized information → Input → Feature extraction module → Decoding graph module → Output → Keyword recognition result

## FIG. 6

Decoding graph module

Keyword model module → Likelihood ratio module → Decision module → Output

Background model module → Likelihood ratio module

## FIG. 7

FIG. 8

An electronic device obtains to-be-recognized information — S901

The electronic device performs feature extraction on the to-be-recognized information, to obtain feature information of the to-be-recognized information — S902

The electronic device inputs the feature information into a keyword model, and performs keyword recognition on the feature information based on the keyword model, to obtain at least one first candidate sequence — S903

The electronic device inputs the feature information into a background model, and recognizes the feature information based on the background model, to obtain at least one second candidate sequence — S905

The electronic device uses a first candidate sequence corresponding to a maximum likelihood probability as a first sequence — S904

The electronic device uses a second candidate sequence corresponding to a maximum likelihood probability as a second sequence — S906

The electronic device uses a ratio of a probability corresponding to the first sequence to a probability corresponding to the second sequence as a similarity between the first sequence and the second sequence — S907

The electronic device determines whether the similarity meets a specified threshold condition — S908

No

Yes

The electronic device outputs the first sequence as a keyword recognition result — S909

The electronic device determines that the keyword recognition result is none — S910

FIG. 9

Keyword recognition apparatus 1000

1001

1002

Recognition module

Determining module

FIG. 10

## INTERNATIONAL SEARCH REPORT

| International application No. |
| --- |
| **PCT/CN2024/099051** |

| A. | CLASSIFICATION OF SUBJECT MATTER |
| --- | --- |

G10L15/00(2013.01)i

According to International Patent Classification (IPC) or to both national classification and IPC

| B. | FIELDS SEARCHED |
| --- | --- |

Minimum documentation searched (classification system followed by classification symbols)

IPC:G10L15/-

Documentation searched other than minimum documentation to the extent that such documents are included in the fields searched

Electronic data base consulted during the international search (name of data base and, where practicable, search terms used)

CNTXT, ENTXTC, DWPI, CNKI: 华为, 关键词, 识别, 解码, 序列, 列表, 全量集, 关键词集, 非关键词集, 集合, 非关键词, 全量, 背景模型, 关键词模型, 模型, 词集, 相似度, 匹配度, 置信度, 可信, 有效: HUAWEI, keyword?, decod+, sequence?, list, gather+, non?, gather+, congregat?, muster+, background, model, mod+, word?, set+, aggregat+, similar+, match+, believ +, credib+, reliab+, valid+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 9159319 B1 (AMAZON TECHNOLOGIES, INC.) 13 October 2015 (2015-10-13) description, columns 9-11, and figures 1-4 | 1-16 |
| A | CN 110223678 A (AI SPEECH LTD.) 10 September 2019 (2019-09-10) entire document | 1-16 |
| A | CN 111798840 A (CHINA MOBILE ONLINE SERVICE CO., LTD. et al.) 20 October 2020 (2020-10-20) entire document | 1-16 |
| A | CN 111933129 A (TENCENT TECHNOLOGY (SHENZHEN) CO., LTD.) 13 November 2020 (2020-11-13) entire document | 1-16 |
| A | CN 112259101 A (TENCENT TECHNOLOGY (SHENZHEN) CO., LTD.) 22 January 2021 (2021-01-22) entire document | 1-16 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 August 2024** | **22 August 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/099051** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 114937449 A (TSINGHUA UNIVERSITY) 23 August 2022 (2022-08-23)<br>entire document | 1-16 |
| A | JP 2003345383 A (PIONEER ELECTRONIC CORP.) 03 December 2003 (2003-12-03)<br>entire document | 1-16 |

Form PCT/ISA/210 (second sheet) (July 2022)

**INTERNATIONAL SEARCH REPORT**
Information on patent family members

| International application No. |
| --- |
| **PCT/CN2024/099051** |

| Patent document cited in search report | | | Publication date (day/month/year) | Patent family member(s) | | | Publication date (day/month/year) |
| --- | --- | --- | --- | --- | --- | --- | --- |
| US | 9159319 | B1 | 13 October 2015 | None | | | |
| CN | 110223678 | A | 10 September 2019 | None | | | |
| CN | 111798840 | A | 20 October 2020 | None | | | |
| CN | 111933129 | A | 13 November 2020 | None | | | |
| CN | 112259101 | A | 22 January 2021 | None | | | |
| CN | 114937449 | A | 23 August 2022 | None | | | |
| JP | 2003345383 | A | 03 December 2003 | JP | 4226273 | B2 | 18 February 2009 |

Form PCT/ISA/210 (patent family annex) (July 2022)

**EP 4 697 321 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311626722